(19) Europäisches Patentamt
European Patent Office
Office européen des brevets

(11) **EP 4 693 573 A1**

(12) **EUROPEAN PATENT APPLICATION**
published in accordance with Art. 153(4) EPC

(43) Date of publication:
**11.02.2026 Bulletin 2026/07**

(21) Application number: **23945735.1**

(22) Date of filing: **27.12.2023**

(51) International Patent Classification (IPC):
*H01M 10/058* (2010.01)

(52) Cooperative Patent Classification (CPC):
Y02E 60/10

(86) International application number:
**PCT/CN2023/142181**

(87) International publication number:
**WO 2025/015857 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2023 CN 202310864495**

(71) Applicant: **Sunwoda Mobility Energy Technology Co., Ltd.**
**Shenzhen, Guangdong 518107 (CN)**

(72) Inventors:
• **CHEN, Zilong**
  **Shenzhen, Guangdong 518107 (CN)**
• **OUYANG, Yunpeng**
  **Shenzhen, Guangdong 518107 (CN)**

(74) Representative: **Elzaburu S.L.P.**
**Edificio Torre de Cristal**
**Paseo de la Castellana 259 C, planta 28**
**28046 Madrid (ES)**

(54) **SECONDARY BATTERY AND ELECTROCHEMICAL DEVICE**

(57)    Disclosed herein are a secondary battery and an electrochemical device. The secondary battery includes a positive electrode sheet, a negative electrode sheet, a separator and an electrolyte; where the positive electrode sheet includes a positive electrode current collector and a positive electrode active material layer arranged on the positive electrode current collector, the positive electrode active material layer includes a positive electrode active material, and the positive electrode active material has a particle size distribution curve including a first peak and a second peak; the secondary battery satisfies: $0.22 \leq K \leq 2.13$, and $K = Dn50 \times (Dv90 - Dv10) / Dv50$; based on that a sum of an area proportion of the first peak and an area proportion of the second peak is 100%, the area proportion of the first peak is $S_1\%$, the area proportion of the second peak is $S_2\%$, and $R = S_1 / S_2$, $0.25 \leq R \leq 2.33$. The present application achieves an increase in compaction density, a reduction in lithium-ion transmission path, and an increase in the energy density of the secondary battery by optimizing the particle size distribution of the positive electrode active material, restricting the volume-based distribution curve to show a bimodal pattern, and grading the large and small particle sizes.

FIG. 1

## Description

This application claims priority to Chinese Patent Application No. 202310864495.1, filed with the China National Intellectual Property Administration on July 14, 2023, and entitled "SECONDARY BATTERY AND ELECTROCHEMICAL DEVICE", which is hereby incorporated by reference in its entirety.

## TECHNICAL FIELD

The embodiments of the present application relate to, but are not limited to, the technical field of batteries, and specifically relate to a secondary battery and an electrochemical device.

## BACKGROUND

Currently, a main method to improve compaction density is to increase the particle size of primary particles. However, due to the poor electrical conductivity of lithium iron phosphate positive electrode material itself, increasing the particle size of the primary particles leads to a longer lithium-ion transmission path, deterioration of kinetic performance, and a significant decrease in gram capacity and rate performance, therefore the application of the lithium iron phosphate positive electrode material in lithium-ion secondary batteries is limited.

## SUMMARY

The present application provides a secondary battery and an electrochemical device, which solves the problems of single particle size distribution, low compaction density and low gram capacity of lithium iron phosphate.

The following is a summary of the subject matter described in detail herein. This summary is not intended to limit the scope of the claims.

A first aspect of the present application provides a secondary battery, including: a positive electrode sheet, a negative electrode sheet, a separator and an electrolyte; where the positive electrode sheet includes a positive electrode current collector and a positive electrode active material layer arranged on the positive electrode current collector, the positive electrode active material layer includes a positive electrode active material, the positive electrode active material has a particle size distribution curve including a first peak and a second peak; and

the secondary battery satisfies: $0.22 \leq K \leq 2.13$, and $K = Dn50 \times (Dv90 - Dv10) / Dv50$;

where $Dn50$ $\mu m$ is a particle size corresponding to a cumulative quantity percentage of the positive electrode active material reaching 50%; $Dv10$ $\mu m$ is a particle size corresponding to a cumulative volume percentage of the positive electrode active material reaching 10%; $Dv50$ $\mu m$ is a particle size corresponding to a cumulative volume percentage of the positive electrode active material reaching 50%; $Dv90$ $\mu m$ is a particle size corresponding to a cumulative volume percentage of the positive electrode active material reaching 90%; and

based on that a sum of an area proportion of the first peak and an area proportion of the second peak is 100%, the area proportion of the first peak is $S_1\%$, the area proportion of the second peak is $S_2\%$, and $R = S_1/S_2$, $0.25 \leq R \leq 2.33$.

Optionally, the first peak and the second peak satisfy at least one of the following characteristics:

(a)

$$(a)\ 0.43 \leq R \leq 1.50;$$

(b) a particle size corresponding to the peak value of the first peak is $D_1$ $\mu m$; and a particle size corresponding to the peak value of the second peak is $D_2$ $\mu m$; satisfying: $0.4 \leq D_1 \leq 0.8$, $2.0 \leq D_2 \leq 3.0$;

(c) the first peak has a height of $H_1$ $\mu m$; and the second peak has a height of $H_2$ $\mu m$; satisfying: $H_1 < H_2$.

Optionally, the Dn50 is 0.3 to 0.45.
Optionally, the Dv10 is 0.3 to 0.55.
Optionally, the Dv50 is 1.1 to 2.0.
Optionally, the Dv90 is 2.0 to 6.0.
Optionally, the Dn50 is 0.3 to 0.35.
Optionally, the Dv10 is 0.33 to 0.5.
Optionally, the Dv50 is 1.2 to 1.5.
Optionally, the Dv90 is 3.0 to 5.5.

Optionally, the secondary battery satisfies:

$0.13 \leq Z \leq 13.4$, and $Z = K \times R \times PD$;
where, PD $g/cm^3$ is a compaction density of the positive electrode sheet.

In some embodiments, the compaction density PD $g/cm^3$ of the positive electrode sheet satisfies: $2.45 \leq PD \leq 2.7$.

In some embodiments, the positive electrode active material includes a lithium-containing compound, the lithium-containing compound further includes an element M, and the element M includes one or more of Ti, V, Mn, Co, Ni, Zr, Nb, Mo, or Y.

In some embodiments, the element M accounts for a mass percentage of e% in the positive electrode active material, satisfying: $0.1 \leq e \leq 0.6$.

In some embodiments, the positive electrode active material includes $Li_aM_xFe_{(1-x)}PO_4$; where M is selected from one or more of Ti, V, Mn, Co, Ni, Zr, Nb, Mo, or Y, $0.8 \leq a \leq 1.2$, and $0 \leq x < 1$.

A second aspect of the present application also provides an electrochemical device, including the mentioned secondary battery.

Compared with the prior art, the present application provides a secondary battery, including: a positive electrode sheet, a negative electrode sheet, a separator and an electrolyte; where the positive electrode sheet includes a positive current collector and a positive active material arranged on the positive current collector; the positive active material has a particle size distribution curve including a first peak and a second peak; the secondary battery satisfies: $0.22 \leq K \leq 2.13$, and $K = Dn50 \times (Dv90 - Dv10) / Dv50$, and also satisfies $0.25 \leq R \leq 2.33$ at the same time. In the present application, by optimizing the particle size distribution of the positive electrode active material and restricting the volume-based distribution curve to show a bimodal pattern, and by grading large particle size and small particle size as well as strictly controlling the particle size, an increase in compaction density and a reduction in lithium-ion transmission path can be achieved, thereby ensuring the kinetic performance of the secondary battery to be exerted, achieving an increase in energy density of the secondary battery, and making the secondary battery easy to control and suitable for industrial production.

**BRIEF DESCRIPTION OF DRAWINGS**

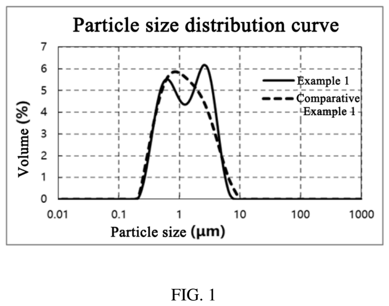

FIG. 1 is a volume particle size distribution diagram of positive electrode active materials of Example 1 and Comparative Example 1 provided by an embodiment of the present application.

**DESCRIPTION OF EMBODIMENTS**

The technical solutions in the embodiments of the present application will be described clearly and completely below in conjunction with the drawings in the embodiments of the present application. The described embodiments are merely a part of the embodiments of the present application, not all of the embodiments. Based on the embodiments in the present application, all other embodiments obtained by those skilled in the art without making creative work shall fall within the scope of protection of the present application.

The disclosure below provides many different implementations or examples for realizing different structures of the present application. In order to simplify the disclosure of the present application, the components and configurations of specific examples are described below. Of course, they are merely examples, and are not intended to limit the present application.

As a core component of new energy vehicles, lithium-ion power battery technology has become the core of the development of the new energy vehicle industry. Lithium iron phosphate material has advantages such as wide source availability, low cost, low toxicity, easy recycling, good safety performance, and long service life, making it one of the most promising positive electrode materials for secondary batteries at present. Due to the low gram capacity of lithium iron phosphate material, the energy density of lithium iron phosphate batteries is low. In order to further improve the energy density, increasing the compaction density of lithium iron phosphate electrode sheets is an effective approach. At present, a main method to increase the compaction density is to increase the particle size of primary particles. However, due to the poor electrical conductivity of lithium iron phosphate, the increase of the particle size of the primary particles leads to a longer lithium-ion transmission path, deterioration of kinetic performance, and a significant decrease in gram capacity and rate performance, thus limiting the application of high-compaction lithium iron phosphate in lithium-ion batteries.

Therefore, it is necessary to develop an ion battery with lithium iron phosphate material that balances both high compaction density and kinetic performance to solve the above-mentioned technical problems.

Secondary battery

The present application provides a secondary battery, including: a positive electrode sheet, a negative electrode sheet, a separator and an electrolyte; where the positive electrode sheet includes a positive electrode current collector and a positive electrode active material layer arranged on the positive electrode current collector; the positive electrode active material layer includes a positive electrode active material; the positive electrode active material has a particle size distribution curve including a first peak and a second peak; and

the secondary battery satisfies: $0.22 \leq K \leq 2.13$, and $K = Dn50 \times (Dv90 - Dv10) / Dv50$;

where, Dn50 $\mu$m is a particle size corresponding to a cumulative quantity percentage of the positive electrode active material reaching 50%;

Dv10 $\mu$m is a particle size corresponding to a cumulative volume percentage of the positive electrode active material reaching 10%;

Dv50 $\mu$m is a particle size corresponding to a cumulative volume percentage of the positive electrode active material reaching 50%;

Dv90 $\mu$m is a particle size corresponding to a cumulative volume percentage of the positive electrode active material reaching 90%; and based on that a sum of an area proportion of the first peak and an area proportion of the second peak is 100%, the area proportion of the first peak is $S_1$%, the area proportion of the second peak is $S_2$%, and $R = S_1/S_2$, $0.25 \leq R \leq 2.33$.

In some embodiments, since the positive electrode active material is a bimodal structure, the positive electrode active material includes particles with both large and small particle sizes, allowing the particles of the positive electrode active material with different particle size ranges to reduce the space between the materials by moving relative to each other; where, the particles with a small particle size may determine the electrical properties such as gram capacity and rate performance, and the particles with a large particle size determine the compaction density of the material. This is because the movement of the particles enables the small particles to fill in the space between the large particles, resulting in a tighter packing of particles and thus a higher compaction density. When the sum of the area proportion of the first peak and the area proportion of the second peak is taken as 100%, and when K ranges from 0.22 to 2.13 and R ranges from 0.25 to 2.33, a positive electrode active material that balances the compaction density and the gram capacity, the rate performance can be obtained, improving the service performance, service life and safety of the secondary battery.

In some embodiments, the particle size distribution curve is obtained by testing using a laser particle size analyzer. In the particle size distribution curve, the abscissa represents particle size and the ordinate represents percentage content. After the corresponding points are plotted according to the percentage contents of the respective size fractions, the points representing the percentage contents of the respective size fractions are connected to form a smooth frequency curve with undulating waves.

In some embodiments, a value of K may be any value of 0.22, 0.24, 0.26, 0.28, 0.30, 0.35, 0.40, 0.45, 0.50, 0.55, 0.60, 0.65, 0.70, 0.75, 0.80, 0.85, 0.90, 0.95, 1.00, 1.10, 1.20, 1.30, 1.40, 1.50, 1.60, 1.70, 1.80, 1.90, 2.00, 2.05, 2.10 and 2.13, or a value in a range between any two values thereof; it is worth noting that the specific numerical values of K are only given by way of example, and any value within the range of 0.22 to 2.13 or a value in an range between any two values thereof shall fall within the protection scope of the present application.

In some embodiments, a value of R may be any value of 0.25, 0.28, 0.30, 0.35, 0.40, 0.45, 0.50, 0.55, 0.60, 0.65, 0.70, 0.75, 0.80, 0.85, 0.90, 0.95, 1.00, 1.10, 1.20, 1.30, 1.40, 1.50, 1.60, 1.70, 1.80, 1.90, 2.00, 2.05, 2.10, 2.20, 2.30 and 2.33, or a value in a range between any two values thereof; it is worth noting that the specific numerical values of R are only given by way of example, and any value within the range of 0.25 to 2.33 or a value in a range between any two values thereof shall fall within the protection scope of the present application.

In some embodiments, $0.33 \leq R \leq 2.0$.

In some embodiments, $0.55 \leq R \leq 1.78$.

In some embodiments, $0.43 \leq R \leq 1.50$. When R is within this range, both the morphology and particle size distribution of the positive electrode active material are in an optimal state, leading to superior comprehensive performance of the secondary battery.

In some embodiments, the area proportion $S_1$% of the first peak and the area proportion $S_2$% of the second peak are determined as follows: a segmentation perpendicular to the abscissa is made at the lowest point between the two peaks in the volume-based particle size distribution curve, and cumulative sums of numerical values of the volume distribution percentage at the left side and right side of the segmentation point are used as the areas, respectively, and the proportions of the two areas are calculated. A value of R may quantify the ratio of large particles to small particles, and when the value of R is within this range, both the compaction density of the positive electrode active material and the kinetic performance of the secondary battery are in optimal states.

In some embodiments, a particle size corresponding to a peak value of the first peak is $D_1$ $\mu$m, which satisfies: 0.4

$\leq D_1 \leq 0.8$. The peak value $D_1$ $\mu$m of the first peak specifically represents a position of the vertex of the first peak in the particle size distribution curve. When the peak value $D_1$ $\mu$m of the first peak is within the above range, the distribution state of the positive electrode active material in the positive electrode active material layer can be optimized, and the kinetic performance of the secondary battery can be better exerted.

In some embodiments, a particle size corresponding to a peak value of the second peak is $D_2$ $\mu$m, which satisfies: $2.0 \leq D_2 \leq 3.0$. The peak value $D_2$ $\mu$m of the second peak specifically represents a position of the vertex of the second peak in the particle size distribution curve, and the peak value $D_2$ $\mu$m of the second peak affects the compaction density of the positive electrode active material as well as the kinetic performance of the secondary battery, therefore $D_2$ $\mu$m should be controlled within a certain range.

In some embodiments, a particle size corresponding to a peak value of the first peak is $D_1$ $\mu$m, and a particle size corresponding to a peak value of the second peak is $D_2$ $\mu$m, satisfying $1.5 \leq D_2 - D_1 \leq 2.4$. For example, $D_2 - D_1$ may be any value of 1.5, 1.7, 1.8, 1.9, 2.0, 2.1, 2.2, 2.3 and 2.4, or a value in a range between any two values thereof.

In some embodiments, $1.6 \leq D_2 - D_1 \leq 2.37$.

In some embodiments, $1.75 \leq D_2 - D_1 \leq 2.3$.

When $D_2 - D_1$ is within the above range, the distribution of the positive electrode active material particles on the positive electrode active material layer can be more reasonable, the pore structure in the positive electrode active material layer can be further optimized, the lithium-ion transmission path can be further shortened, the contact between the positive electrode active materials is in a better state, the internal resistance of the secondary battery is reduced, and the comprehensive performance of the secondary battery is improved.

In some embodiments, a value of $D_1$ $\mu$m is any value of 0.4 $\mu$m, 0.5 $\mu$m, 0.6 $\mu$m, 0.7 $\mu$m and 0.8 $\mu$m, or a value in a range between any two values thereof.

In some embodiments, $0.45 \leq D_1 \leq 0.75$.

When the value of $D_1$ $\mu$m is within the above range, the distribution of the positive electrode active material particles can be optimized, and the comprehensive performance of the secondary battery can be further improved.

In some embodiments, a value of $D_2$ $\mu$m is any value of 2.0 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m and 3.0 $\mu$m, or a value in a range between any two values thereof.

In some embodiments, $2.15 \leq D_2 \leq 2.9$.

In some embodiments, $2.25 \leq D_2 \leq 2.9$.

When the value of $D_2$ $\mu$m is within the above range, the distribution of the positive electrode active material particles can be optimized, and the comprehensive performance of the secondary battery can be further improved.

In some embodiments, the first peak has a height of $H_1$ $\mu$m; and the second peak has a height of $H_2$ $\mu$m; which satisfy: $H_1 < H_2$.

In some embodiments, when the height $H_1$ $\mu$m of the first peak is less than the height $H_2$ $\mu$m of the second peak, the compaction density and the gram capacity, rate performance can be balanced, the lithium-ion transmission capacity can be improved, and at the same time, the cycle life and energy efficiency of the secondary battery can be enhanced.

In some embodiments, Dn50 $\mu$m is any value of 0.3 $\mu$m, 0.31 $\mu$m, 0.32 $\mu$m, 0.33 $\mu$m, 0.34 $\mu$m, 0.35 $\mu$m, 0.36 $\mu$m, 0.37 $\mu$m, 0.38 $\mu$m, 0.39 $\mu$m, 0.40 $\mu$m, 0.41 $\mu$m, 0.42 $\mu$m, 0.43 $\mu$m, 0.44 $\mu$m and 0.45 $\mu$m or a value in a range between any two values thereof. Dn50 reflects a particle size of small particles in the positive electrode active material, which directly affects the battery's gram capacity, rate performance, etc. Controlling the value of Dn50 $\mu$m can affect the space between small particles and large particles, thereby affecting the compaction density of the material. With Dn50 $\mu$m controlled within the above range, the comprehensive performance of the secondary battery can be effectively improved.

In some embodiments, Dn50 $\mu$m ranges from 0.3 $\mu$m to 0.45 $\mu$m.

In some embodiments, Dn50 $\mu$m ranges from 0.31 $\mu$m to 0.42 $\mu$m.

In some embodiments, Dv10 $\mu$m is any value of 0.3 $\mu$m, 0.31 $\mu$m, 0.32 $\mu$m, 0.33 $\mu$m, 0.34 $\mu$m, 0.35 $\mu$m, 0.36 $\mu$m, 0.37 $\mu$m, 0.38 $\mu$m, 0.39 $\mu$m, 0.40 $\mu$m, 0.41 $\mu$m, 0.42 $\mu$m, 0.43 $\mu$m, 0.44 $\mu$m, 0.45 $\mu$m, 0.46 $\mu$m, 0.47 $\mu$m, 0.48 $\mu$m, 0.49 $\mu$m, 0.50 $\mu$m, 0.51 $\mu$m, 0.52 $\mu$m, 0.53 $\mu$m, 0.54 $\mu$m and 0.55 $\mu$m, or a value in a range between any two values thereof.

In some embodiments, Dv10 $\mu$m ranges from 0.31 $\mu$m to 0.5 $\mu$m.

In some embodiments, Dv10 $\mu$m ranges from 0.32 $\mu$m to 0.42 $\mu$m.

In some embodiments, Dv10 $\mu$m ranges from 0.33 $\mu$m to 0.41 $\mu$m. When a value of Dv10 $\mu$m is in the above range, the distribution of the positive electrode active material particles in the positive electrode active material layer can be further improved, and the comprehensive performance of the secondary battery can be further improved.

In some embodiments, Dv50 $\mu$m is any value of 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m and 2.0 $\mu$m, or a value in a range between any two values thereof. When Dv50 $\mu$m is within the above range, the proportion of large particles in the positive active particles can be controlled, the distribution of the positive active material particles in the positive active material layer can be made in an optimized state, and the comprehensive performance of the secondary battery can be improved.

In some embodiments, Dv50 $\mu$m ranges from 1.2 $\mu$m to 1.8 $\mu$m.

In some embodiments, Dv50 $\mu$m ranges from 1.2 $\mu$m to 1.7 $\mu$m. When Dv50 $\mu$m is within the above range, the distribution of the positive electrode active material particles in the positive electrode active material layer can be further improved, the contact between the positive electrode active material particles can be affected, and the comprehensive performance of the secondary battery can be further improved.

In some embodiments, Dv90 $\mu$m is any one of 2.0 $\mu$m, 2.5 $\mu$m, 3.0 $\mu$m, 3.5 $\mu$m, 4.0 $\mu$m, 4.5 $\mu$m, 5.0 $\mu$m, 5.5 $\mu$m and 6.0 $\mu$m, or a value in a range between any two values thereof.

In some embodiments, Dv90 ranges from 3.3 $\mu$m to 5.6 $\mu$m.

In some embodiments, Dv10 $\mu$m, Dv50 $\mu$m and Dv90 $\mu$m can reflect the particle size of large particles in the positive electrode active material, and are used for directly affecting the compaction density of the positive electrode active material. When Dv10 $\mu$m, Dv50 $\mu$m and Dv90 $\mu$m are too small, the compaction density of the positive electrode active material is reduced, and the positive electrode active material layer is prone to cracking. If the compaction density is increased by an external pressure, the large particles will become brittle after being subjected to a force, leading to damage to the positive electrode active material and thus affecting the cycle performance of the secondary battery. When Dv10 $\mu$m, Dv50 $\mu$m and Dv90 $\mu$m are too large, the large particles have more angular edges and corners, which will affect the strength of the current collector during the subsequent preparation process of the electrode sheets, resulting in damage to the performance of the electrode sheets, and affecting the energy efficiency and cycle performance of the secondary battery.

In some embodiments, the secondary battery satisfies:

$0.13 \leq Z \leq 13.4$, and $Z = K \times R \times PD$; where PD g/cm$^3$ is a compaction density of the positive electrode sheet.

In some embodiments, the compaction density of the positive electrode sheet is calculated by the following formula:

Compaction density of positive electrode sheet = Areal density of positive electrode sheet / (Thickness of positive electrode sheet after rolling - Thickness of positive electrode current collector), with the unit being g/cm$^3$.

In some embodiments, the compaction density is tested using a compaction density meter, and the testing process may refer to the Chinese National Standard GB/T 24533-2019.

In some embodiments, Z is any value of 0.13, 0.20, 0.30, 0.40, 0.50, 0.60, 0.70, 0.80, 0.90, 1.00, 1.50, 2.00, 2.50, 3.00, 4.00, 5.00, 6.00, 7.00, 8.00, 9.00, 10.00, 11.00, 12.00, 13.00, 13.10, 13.20, 13.30 and 13.40, or a value in a range between any two values thereof. By further limiting the range of value of Z, and further by controlling the range of the compaction density of the positive electrode sheet on the premise of regulating the compaction density by optimizing the particle size distribution and optimizing the ratio of large particles to small particles, the positive electrode active material with this particle size distribution has an optimized size gradation of the large particles and the small particles, and at the same time has an appropriate primary particle size of the large particles, achieving an effect of high compaction. The secondary battery prepared from such electrode sheets has lower kinetic polarization, and higher gram capacity and rate performance, realizing better kinetic performance of the secondary battery.

In some embodiments, $0.53 \leq Z \leq 11.4$.

In some embodiments, $0.53 \leq Z \leq 9.8$.

In some embodiments, $0.65 \leq Z \leq 8.9$. When Z is within the above range, the positive electrode active material particles in the positive electrode active material layer have an optimized size gradation of large particles and small particles, which enables better contact between the positive electrode active material particles, shortens the electrolyte infiltration path, reduces the problem of kinetic polarization, and optimizes the comprehensive performance of the secondary battery.

In some embodiments, the positive electrode sheet has a compaction density PD g/cm$^3$, satisfying: $2.45 \leq PD \leq 2.7$. When the compaction density is within this range, the energy density of the secondary battery is higher, and the kinetics of the positive electrode active material layer and the intensity of side reactions can be balanced, thereby prolonging the service life of the secondary battery.

In some embodiments, a value of compaction density PD g/cm$^3$ of the positive electrode sheet may be any value of 2.45 g/cm$^3$, 2.50 g/cm$^3$, 2.55 g/cm$^3$, 2.60 g/cm$^3$, 2.65 g/cm$^3$ and 2.70 g/cm$^3$, or a value in a range between any two values thereof.

In some embodiments, the positive electrode active material layer may be a single layer or multiple layers. Each layer of the multi-layer positive electrode active material may contain the same or different positive electrode active materials. The positive electrode active material is any substance capable of reversibly intercalating and deintercalating metal ions such as lithium ions.

The positive electrode sheet is a single-sided electrode sheet or a double-sided electrode sheet. When the positive electrode sheet is a single-sided electrode sheet, the positive electrode active material layer is arranged on one surface of the negative electrode current collector. When the positive electrode sheet is a double-sided electrode sheet, the positive electrode active material layer is arranged on both surfaces of the positive electrode current collector. The positive electrode sheet may also have both a single-sided positive electrode sheet region and a double-sided positive electrode sheet region.

In some embodiments, the positive electrode active material includes a doping element and/or a coating element.

In some embodiments, the positive electrode active material includes a lithium-containing compound, and the lithium-containing compound further includes an element M, and the element M includes one or more of Ti, V, Mn, Co, Ni, Zr, Nb, Mo, or Y; where the element M has a mass percentage of e% in the positive electrode active material, which satisfies: $0.1 \leq e \leq 0.6$. When a content of the element M satisfies the above range, one-dimensional lithium-ion channels of the positive electrode active material can be broadened, and the kinetic performance of large particles can be improved.

In some embodiments, the positive electrode active material includes at least one of lithium iron phosphate (LFP) or lithium iron manganese phosphate.

In some embodiments, the positive electrode active material includes $Li_aM_xFe_{(1-x)}PO_4$; where the element M includes one or more of Ti, V, Mn, Co, Ni, Zr, Nb, Mo, or Y, $0.8 \leq a \leq 1.2$, and $0 \leq x < 1$.

In some embodiments, the element M includes Mn.

In some embodiments, the element M includes Mn, and one or more of Ti, V, Co, Ni, Zr, Nb, Mo, or Y.

In some embodiments, a carbon-composite lithium iron phosphate material is adopted in the present application, and its preparation method may be a solid-phase method process for preparation, or mixing materials prepared by a solid-phase method and a liquid-phase method. A carbon content of the prepared carbon-composite lithium iron phosphate ranges from 0.8% to 2.0%.

In some embodiments, a preparation method of a positive electrode active material may include: high-temperature solid-phase method, carbothermal reduction method, spray drying method, liquid-phase method, sol-gel method, template method or hydrothermal synthesis method.

In some embodiments, an intermediate product obtained during a preparation process of a positive electrode active material may also be subjected to crushing treatment and sieving to obtain a positive electrode active material with optimized particle size distribution and specific surface area. The method for crushing is not subjected to any particular restriction, and may be selected according to actual needs, such as using a particle crusher or a jet mill. The preparation method of the positive electrode active material of the present application is not limited to the above preparation method, as long as the formed positive electrode active material possesses the characteristics disclosed in the present application.

In addition, the positive electrode active material layer also includes a positive electrode conductive agent and a positive electrode binder.

In some embodiments, the type of positive electrode conductive agent is not subjected to any restriction, and any known conductive agent may be used. Examples of the positive electrode conductive agents may include, but are not limited to, amorphous carbon materials such as natural graphite, artificial graphite, acetylene black, and needle coke; carbon nanotube; graphene, and the like. The above positive electrode conductive agents may be used alone or in any combination.

In some embodiments, the type of positive electrode binder used in the manufacture of the positive electrode active material layer is not subjected to any particular restriction. In a case of a coating method, any material that is soluble or dispersible in a liquid medium used in the manufacture of electrodes is acceptable. Examples of the positive electrode binders may include, but are not limited to, one or more of the following: resin-based polymers such as polyethylene, polypropylene, polyethylene terephthalate, polymethyl methacrylate, polyimide, aromatic polyamide, cellulose, and nitrocellulose; rubber-like polymers such as styrene-butadiene rubber (SBR), nitrile-butadiene rubber (NBR), fluororubber, isoprene rubber, polybutadiene rubber, and ethylene-propylene rubber; thermoplastic elastomer-like polymers such as styrene-butadiene-styrene block copolymer or its hydride, ethylene-propylene-diene terpolymer (EPDM), styrene-ethylene-butadiene-ethylene copolymer, and styrene-isoprene-styrene block copolymer or its hydride; soft resin-like polymers such as syndiotactic-1,2-polybutadiene, polyvinyl acetate, ethylene-vinyl acetate copolymer, and propylene-α-olefin copolymer; fluorine-based polymers such as polyvinylidene fluoride (PVDF), polytetrafluoroethylene, fluorinated polyvinylidene fluoride, and polytetrafluoroethylene-ethylene copolymer; and polymer compositions having ionic conductivity for alkali metal ions (especially lithium ions), and the like. The above-mentioned positive electrode binders can be used alone or in any combination.

In some embodiments, the type of solvent used for forming a positive electrode slurry is not subjected to any restriction, as long as it is a solvent that can dissolve or disperse the positive electrode active material, the positive electrode conductive agent, and the positive electrode binder. Examples of the solvents used for forming the positive electrode slurry may include any one of aqueous solvent and organic solvent. Examples of aqueous media may include, but are not limited to, water, and a mixed media of alcohol and water, etc. Examples of organic media may include, but are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide and dimethyl sulfoxide, and the like.

The type of positive electrode current collector is not subjected to particular restriction, which may be any known material suitable for use as a positive electrode current collector. Examples of positive electrode current collectors may include, but are not limited to, metal materials such as aluminum, stainless steel, nickel plating, titanium, and tantalum; metal composite materials with a carbon coating on the surface; and composite materials formed by a polymer and a metal layer. In some embodiments, the positive electrode current collector is a carbon-coated metal material. In some embodiments, the positive electrode current collector is aluminum.

In some embodiments, a preparation process of a positive electrode sheet may include the steps such as stirring, coating, drying, cold pressing, slitting and cutting. The preparation of the positive electrode sheet includes: dispersing the positive electrode active material, the positive electrode conductive agent and the positive electrode binder in N-methylpyrrolidone (NMP) in a certain ratio, coating the obtained slurry on an aluminum foil, then performing drying, and then old pressing and slitting to obtain the positive electrode sheet.

Negative electrode sheet

A negative electrode sheet includes a negative electrode current collector and a negative electrode active material layer arranged on at least one surface of the negative electrode current collector, where the negative electrode active material layer includes a negative electrode active material, and the negative electrode active material includes graphite.

The negative electrode sheet is a single-sided electrode sheet or a double-sided electrode sheet. When the negative electrode sheet is a single-sided electrode sheet, the negative electrode active material layer is arranged on one surface of the negative electrode current collector. When the negative electrode sheet is a double-sided electrode sheet, the negative electrode active material layer is arranged on both surfaces of the negative electrode current collector. The negative electrode sheet may also have both a single-sided negative electrode sheet region and a double-sided negative electrode sheet region.

Separator

In order to prevent short circuit, a separator is usually provided between a positive electrode sheet and a negative electrode sheet. The type of separator is not subjected to particular restriction and may be selected according to actual needs. The separator may be polypropylene membrane, polyethylene membrane, polyvinylidene fluoride membrane, spandex membrane, aramid membrane, or multi-layer composite membrane modified by coating.

Electrolyte

In some embodiments, the main components of an electrolyte include a lithium salt, an organic solvent, and an additive. The type and composition of the lithium salt and the organic solvent are not subjected to particular restriction and may be selected according to actual needs. Where, the lithium salt may include lithium hexafluorophosphate, and the solvent may include ethylene carbonate, ethyl methyl carbonate, dimethyl carbonate, diethyl carbonate, or propyl propionate, and the like.

In some embodiments, the preparation of a secondary battery includes stacking a positive electrode sheet, a separator, and a negative electrode sheet in sequence to make the separator positioned between the positive electrode sheet and negative electrode sheet to play an isolation role, and winding them into a square-shaped bare cell, placing the cell into a battery case, baking it at 65-120 °C to remove water, injecting the electrolyte therein, then subjecting it to processes such as sealing, standing, hot and cold pressing, forming, aging, and capacity grading to obtain the secondary battery.

In some embodiments, the preparation of a secondary battery includes:

mixing lithium iron phosphate, a positive electrode conductive agent, a positive electrode binder and a positive electrode solvent to prepare a positive electrode slurry, and coating the positive electrode slurry on a surface of a positive electrode current collector to obtain a positive electrode sheet;

mixing graphite, a negative electrode dispersant, a negative electrode conductive agent, a negative electrode binder and a negative electrode solvent to prepare a negative electrode slurry, and coating the negative electrode slurry on a surface of a negative electrode current collector to obtain a negative electrode sheet;

assembling the positive electrode sheet, the negative electrode sheet, a separator and other battery components prepared in the present application, and performing processes such as shaping, baking, packaging, electrolyte injecting, forming, and capacity grading, to obtain the secondary battery. The type of battery includes soft-pack battery, cylindrical battery, aluminum-cased battery, and the like. The above only takes a soft-pack lithium-ion battery as an example, and the present application is not limited to the application of soft-pack battery, but also includes the application of common lithium-ion battery forms such as aluminum-cased battery and cylindrical battery.

Electrochemical device

In some embodiments, the present application provides an electrochemical device. The electrochemical device of the present application includes the above-mentioned secondary battery. The electrochemical device may be used for, but not limited to, backup power supply, motor, electric vehicle, electric motorcycle, power-assisted bicycle, bicycle, electric tool, large household battery, and the like.

In the present application, multiple tests have been conducted successively, and some of the test results are now provided for reference to further describe the present embodiments in detail, and the following is a detailed description in conjunction with specific examples. It should be understood that these examples are only used for illustrating the present application and are not intended to limit the scope of the present application.

Example 1

Lithium carbonate and iron phosphate were mixed in a molar ratio of Li : Fe = 1.05 : 1, and then 1.0% by mass of iron oxide, 5% by mass of glucose, and 0.3% by mass of a Ti-doped metal oxide were added to the mixture of lithium carbonate and iron phosphate, and pure water was added and the mixture was ground. Where, the iron phosphate has a Dv50 $\mu$m of less than or equal to 5 $\mu$m, and the mixture was ground until the Dv50 $\mu$m reached 100-400 nm. The ground mixture was subjected to spray drying; then sintered in a nitrogen protective atmosphere at a sintering temperature of 800 °C for 10h for holding temperature. After sintering, the product was crushed to obtain a carbon-composite lithium iron phosphate material with large particle size and small particle size graded. A mass percentage of carbon in the carbon-composite lithium iron phosphate material was 1.35wt%, and a doping element was Ti, with a doping content percentage by mass of 0.3%. As shown in Figure 1, the volume-based particle size distribution curve of the carbon-composite lithium iron phosphate material presents a bimodal pattern, where Dn50 $\mu$m is 0.35 $\mu$m, Dv10 $\mu$m is 0.4 $\mu$m, Dv50 $\mu$m is 1.22 $\mu$m, and Dv90 $\mu$m is 3.38 $\mu$m, and thus K = 0.85; in the volume-based particle size distribution, a first peak has a peak value D1 $\mu$m of 0.63 $\mu$m, a second peak has a peak value D2 $\mu$m of 2.51 $\mu$m, and a ratio R of an area of the first peak to an area of the second peak is 46 : 54 = 0.85; and a height of the first peak is smaller than that of the second peak.

Lithium iron phosphate, conductive carbon black (SP) and PVDF were mixed in a weight ratio of 97 : 0.7 : 2.3, then NMP was added for thorough mixing, and after evenly mixing, the mixture was coated on both surfaces of a carbon-coated aluminum foil. Then the electrode sheet was subjected to drying, rolling, slitting and cutting to obtain a positive electrode sheet.

Graphite, conductive carbon black (SP), CMC, and SBR were mixed in a mass ratio of 96.3 : 0.7 : 1.1 : 1.9, then fully mixed in water, and after evenly mixing, the mixture was coated on both surfaces of a copper foil. Then the electrode sheet was subjected to drying, rolling, slitting, and cutting to obtain a negative electrode sheet.

A polyethylene membrane was used as a separator.

Vinylene carbonate, ethyl methyl carbonate and dimethyl carbonate were mixed in a mass ratio of 1 : 1 : 1, then lithium hexafluorophosphate was added, and after evenly mixing, an additive was added. Where, based on the mass of an electrolyte, the content of lithium hexafluorophosphate was 12%, and the content of the additive vinylene carbonate was 0.5%, thereby obtaining the electrolyte.

The prepared positive electrode sheet, negative electrode sheet, separator, electrolyte and other battery components were assembled, and subjected to processes such as shaping, baking, packaging, electrolyte injecting, forming, and capacity grading, to obtain a secondary battery.

Examples 2-7

The particle sizes of the positive electrode active material were screened to obtain carboncontaining lithium iron phosphate with different particle sizes. The compaction density was controlled by adjusting the rolling thickness of a positive electrode active material layer. The secondary batteries were prepared according to the method of Example 1. The parameters of Examples 2-7 are shown in Tables 1 and 2.

Example 8

The specific preparation is the same as that of Example 1, with the difference that the doping element is V with a doping content of 0.25%. The parameters of Example 8 are shown in Tables 1 and 2.

Example 9

The specific preparation is the same as that of Example 1, with the difference that the doping element is Nb with a doping content of 0.2%. The parameters of Example 9 are shown in Tables 1 and 2.

Examples 10-32

The specific preparations were the same as that of Example 1, with the difference that the parameters of Examples 10-32 are shown in Table 1 and Table 2 by adjusting the particle size distribution and the rolling pressure.

Comparative Example 1

A conventional lithium iron phosphate material with high gram capacity is adopted, which has a particle size distribution indicating a unimodal pattern as shown in Figure 1, and of which data of particle size distribution is shown in Table 1, and the compaction density is lower than those of the examples of the present invention. A secondary battery is directly prepared using the conventional lithium iron phosphate material, and the electrical properties of the secondary battery are shown in Table 3.

Comparative Example 2

A high lithium iron phosphate material prepared by a conventional method without addition of a fluxing agent during the preparation process is adopted. A higher sintering temperature ($\geq 880°C$) is needed to melt small particles into large particles to obtain a lithium iron phosphate material, and the data of particle size distribution of the lithium iron phosphate material is shown in Table 1. A secondary battery is directly prepared using the above-mentioned lithium iron phosphate material, and the electrical properties of the secondary battery are shown in Table 3.

Comparative Example 3

A high lithium iron phosphate material prepared by a conventional method without addition of a fluxing agent during the preparation process is adopted. 0.15% of a doping element Ti is added and the mixture is sintered at a relatively high temperature to obtain a lithium iron phosphate material. The parameters of the lithium iron phosphate material are shown in Table 1 and Table 2. A secondary battery is directly prepared using the above-mentioned lithium iron phosphate material, and the electrical properties of the secondary battery are shown in Table 3.

Battery performance testing

A button cell has a 0.1C discharge gram capacity (mAh/g), was subjected to charging and discharging at a constant temperature environment of 25°C, with a voltage range from 2.0 V to 3.7 V and a current rate of 0.1C.
A full cell has a 0.33C discharge gram capacity (mAh/g), was subjected to charging and discharging at a constant temperature environment of 25°C, with a voltage range from 2.5 V to 3.65 V and a current rate of 0.33C.
A full cell has a 4C discharge gram capacity (mAh/g), was subjected to charging and discharging at a constant temperature environment of 25°C, with a voltage range from 2.5 V to 3.65 V and a current rate of 4C.
DC internal resistance: in a constant temperature environment of 25 °C, the state of charge (SOC) of a battery was adjusted to 50% using a current of 1C; after resting for 30 minutes, the battery was discharged for 10 seconds using a 5C current (I); and a voltage difference ($\Delta V$) before and after discharging was recorded. The DC internal resistance (DCR) is: DCR = $\Delta V$ / I.
Cycle life at standard temperature: at 25 °C, a secondary battery was charged at a constant current of 1C to a voltage of 3.65 V, then charged at a constant voltage of 3.65 V to a current of 0.05C; after resting for 5 minutes, the secondary battery was discharged at a constant current of 1C to 2.5 V, this constitutes a first cycle of charge and discharge process of the secondary battery, and a discharge capacity at this time is recorded as a discharge capacity of the first cycle of the secondary battery. The secondary battery was subjected to cycle testing according to the above process, and the discharge capacity of the battery was recorded. When the discharge capacity of the battery is 80% of the discharge capacity of the first cycle, the number of cycles of the secondary battery was recorded.
The performance parameters of the batteries in the examples and comparative examples are shown in Table 3.

Table 1

| | Dn50 μm | Dv10 μm | Dv50 μm | Dv90 μm | $D_1$ μm | $D_2$ μm | $S_1$% | $S_2$% | K | R |
|---|---|---|---|---|---|---|---|---|---|---|
| Example 1 | 0.35 | 0.4 | 1.22 | 3.38 | 0.63 | 2.51 | 46 | 54 | 0.85 | 0.85 |
| Example 2 | 0.37 | 0.38 | 1.46 | 3.87 | 0.61 | 2.5 | 41 | 59 | 0.88 | 0.69 |
| Example 3 | 0.42 | 0.39 | 1.63 | 4.52 | 0.72 | 2.3 | 36 | 64 | 1.06 | 0.56 |

(continued)

| | Dn50 μm | Dv10 μm | Dv50 μm | Dv90 μm | $D_1$ μm | $D_2$ μm | $S_1$% | $S_2$% | K | R |
|---|---|---|---|---|---|---|---|---|---|---|
| Example 4 | 0.32 | 0.38 | 1.25 | 4.63 | 0.46 | 2.7 | 47 | 53 | 1.09 | 0.89 |
| Example 5 | 0.29 | 0.35 | 1.2 | 4.89 | 0.49 | 2.2 | 50 | 50 | 1.1 | 1 |
| Example 6 | 0.45 | 0.41 | 2 | 5.21 | 0.72 | 2.89 | 20 | 80 | 1.08 | 0.25 |
| Example 7 | 0.43 | 0.41 | 1.68 | 5.21 | 0.42 | 2.76 | 21 | 79 | 1.23 | 0.27 |
| Example 8 | 0.34 | 0.39 | 1.25 | 4.35 | 0.62 | 2.5 | 47 | 53 | 1.08 | 0.89 |
| Example 9 | 0.35 | 0.42 | 1.32 | 5.34 | 0.55 | 2.56 | 46 | 54 | 1.3 | 0.85 |
| Example 10 | 0.33 | 0.33 | 1.41 | 2.89 | 0.42 | 2.17 | 48 | 52 | 0.60 | 0.92 |
| Example 11 | 0.32 | 0.37 | 1.45 | 2.2 | 0.52 | 2.01 | 20 | 80 | 0.40 | 0.25 |
| Example 12 | 0.31 | 0.51 | 1.74 | 2.21 | 0.58 | 2.01 | 21 | 79 | 0.30 | 0.27 |
| Example 13 | 0.35 | 0.38 | 1.45 | 3.9 | 0.56 | 2.45 | 55 | 45 | 0.85 | 1.22 |
| Example 14 | 0.34 | 0.38 | 1.32 | 3.7 | 0.56 | 2.45 | 60 | 40 | 0.86 | 1.5 |
| Example 15 | 0.33 | 0.38 | 1.21 | 3.65 | 0.56 | 2.45 | 64 | 36 | 0.89 | 1.78 |
| Example 16 | 0.32 | 0.37 | 1.18 | 3.42 | 0.56 | 2.45 | 69 | 31 | 0.83 | 2.23 |
| Example 17 | 0.33 | 0.32 | 1.13 | 4.67 | 0.38 | 2.35 | 65 | 35 | 1.27 | 1.86 |
| Example 18 | 0.41 | 0.45 | 1.76 | 5.64 | 0.82 | 2.87 | 43 | 57 | 1.21 | 0.75 |
| Example 19 | 0.35 | 0.33 | 1.34 | 3.61 | 0.54 | 1.9 | 55 | 45 | 0.86 | 1.22 |
| Example 20 | 0.28 | 0.3 | 1.11 | 2.67 | 0.42 | 2.2 | 50 | 50 | 0.60 | 1.00 |
| Example 21 | 0.35 | 0.4 | 1.22 | 3.38 | 0.63 | 2.51 | 46 | 54 | 0.85 | 0.85 |
| Example 22 | 0.35 | 0.4 | 1.22 | 3.38 | 0.63 | 2.51 | 46 | 54 | 0.85 | 0.85 |
| Example 23 | 0.35 | 0.4 | 1.22 | 3.38 | 0.63 | 2.51 | 46 | 54 | 0.85 | 0.85 |
| Example 24 | 0.3 | 0.42 | 1.32 | 4.21 | 0.54 | 2.81 | 64 | 36 | 0.86 | 1.78 |
| Example 25 | 0.33 | 0.3 | 1.15 | 4.51 | 0.53 | 2.61 | 55 | 45 | 1.21 | 1.22 |
| Example 26 | 0.43 | 0.55 | 1.79 | 5.67 | 0.67 | 2.95 | 50 | 50 | 1.23 | 1.00 |
| Example 27 | 0.37 | 0.45 | 1.1 | 4.89 | 0.57 | 2.43 | 50 | 50 | 1.49 | 1.00 |
| Example 28 | 0.32 | 0.36 | 1.23 | 2 | 0.45 | 1.87 | 60 | 40 | 0.43 | 1.50 |
| Example 29 | 0.3 | 0.56 | 1.99 | 2.1 | 0.78 | 1.99 | 40 | 60 | 0.23 | 0.67 |
| Example 30 | 0.34 | 0.35 | 1.34 | 4.53 | 0.67 | 2.59 | 70 | 30 | 1.06 | 2.33 |
| Example 31 | 0.32 | 0.33 | 1.21 | 3.89 | 0.42 | 2.17 | 60 | 40 | 0.94 | *1.50* |
| Example 32 | 0.45 | 0.3 | 1.2 | 5.97 | 0.65 | 2.87 | 70 | 30 | 2.13 | 2.33 |
| Comparative Example 1 | 0.32 | 0.38 | 1.09 | 3.92 | / | / | / | / | 1.04 | / |
| Comparative Example 2 | 0.58 | 0.4 | 2.06 | 14.3 | 0.82 | 3.15 | 60 | 40 | 3.91 | 1.5 |
| Comparative Example 3 | 0.42 | 0.37 | 1.88 | 5.8 | 0.72 | 2.65 | 15 | 85 | 1.21 | 0.18 |

Table 2

| | PD g/cm$^3$ | Z | Doping element | Doping content |
|---|---|---|---|---|
| Example 1 | 2.6 | 1.89 | Ti | 0.30% |
| Example 2 | 2.63 | 1.62 | Ti | 0.30% |
| Example 3 | 2.56 | 1.59 | Ti | 0.30% |
| Example 4 | 2.58 | 2.49 | Ti | 0.30% |

(continued)

|  | PD g/cm$^3$ | Z | Doping element | Doping content |
|---|---|---|---|---|
| Example 5 | 2.55 | 2.8 | Ti | 0.30% |
| Example 6 | 2.7 | 0.73 | Ti | 0.30% |
| Example 7 | 2.45 | 0.81 | Ti | 0.30% |
| Example 8 | 2.6 | 2.48 | V | 0.25% |
| Example 9 | 2.6 | 2.89 | Nb | 0.20% |
| Example 10 | 2.5 | 1.38 | Ti | 0.30% |
| Example 11 | 2.55 | 0.26 | Ti | 0.30% |
| Example 12 | 2.6 | 0.21 | Ti | 0.30% |
| Example 13 | 2.6 | 2.70 | Ti | 0.30% |
| Example 14 | 2.6 | 3.34 | Ti | 0.30% |
| Example 15 | 2.6 | 4.13 | Ti | 0.30% |
| Example 16 | 2.6 | 4.80 | Ti | 0.30% |
| Example 17 | 2.45 | 5.78 | Ti | 0.30% |
| Example 18 | 2.45 | 2.23 | Ti | 0.30% |
| Example 19 | 2.45 | 2.57 | Ti | 0.30% |
| Example 20 | 2.45 | 1.46 | Ti | 0.30% |
| Example 21 | 2.6 | 1.89 | Ti | 0.15% |
| Example 22 | 2.6 | 1.89 | Ti | 0.35% |
| Example 23 | 2.6 | 1.89 | Ti | 0.55% |
| Example 24 | 2.55 | 3.90 | Ti | 0.30% |
| Example 25 | 2.45 | 3.62 | Ti | 0.30% |
| Example 26 | 2.58 | 3.17 | Ti | 0.30% |
| Example 27 | 2.45 | 3.66 | Ti | 0.30% |
| Example 28 | 2.45 | 1.57 | Ti | 0.30% |
| Example 29 | 2.45 | 0.38 | Ti | 0.30% |
| Example 30 | 2.6 | 6.43 | Ti | 0.30% |
| Example 31 | 2.45 | 3.46 | Ti | 0.30% |
| Example 32 | 2.7 | 13.40 | Ti | 0.30% |
| Comparative Example 1 | 2.42 | / | / | / |
| Comparative Example 2 | 2.6 | 15.26 | / | / |
| Comparative Example 3 | 2.53 | 0.54 | Ti | 0.15% |

Table 3

| | 0.1C discharge gram capacity of button cell (mAh/g) | 0.33C discharge gram capacity of full cell (mAh/g) | 4C discharge gram capacity of full cell (mAh/g) | DC internal resistance ( mΩ ) | Cycle life at standard temperature (cls) |
|---|---|---|---|---|---|
| Example 1 | 156.6 | 141.2 | 128.4 | 26.3 | 5540 |
| Example 2 | 155.6 | 140.8 | 126.6 | 26.5 | 5600 |
| Example 3 | 155.3 | 140.3 | 125.3 | 27.2 | 5600 |

(continued)

| | 0.1C discharge gram capacity of button cell (mAh/g) | 0.33C discharge gram capacity of full cell (mAh/g) | 4C discharge gram capacity of full cell (mAh/g) | DC internal resistance ( mΩ ) | Cycle life at standard temperature (cls) |
|---|---|---|---|---|---|
| Example 4 | 156.4 | 141.1 | 128.6 | 26.2 | 5650 |
| Example 5 | 154.8 | 142.1 | 129.8 | 25.9 | 5590 |
| Example 6 | 153.8 | 136.7 | 121.2 | 27.8 | 5720 |
| Example 7 | 154.2 | 136.6 | 123.6 | 27.4 | 5700 |
| Example 8 | 156.8 | 141.7 | 128.9 | 26.8 | 5670 |
| Example 9 | 155.9 | 140.9 | 128.5 | 26.3 | 5620 |
| Example 10 | 156.1 | 142.1 | 129.6 | 26.1 | 5630 |
| Example 11 | 156.7 | 142.6 | 129.6 | 26.2 | 5600 |
| Example 12 | 157.2 | 143.3 | 130.9 | 25.6 | 5590 |
| Example 13 | 155.1 | 141.7 | 129.6 | 25.9 | 5580 |
| Example 14 | 155.8 | 142.5 | 130.3 | 25.7 | 5580 |
| Example 15 | 156.9 | 143.3 | 131.2 | 25.4 | 5600 |
| Example 16 | 157.3 | 143.7 | 131.9 | 25.1 | 5580 |
| Example 17 | 154.2 | 138.6 | 124.9 | 27.1 | 5680 |
| Example 18 | 153.1 | 135.9 | 121.5 | 27.8 | 5670 |
| Example 19 | 154.6 | 139.9 | 128.5 | 26.3 | 5530 |
| Example 20 | 155.4 | 142.5 | 130.1 | 25.7 | 5530 |
| Example 21 | 154.5 | 138.7 | 125.4 | 27.5 | 5630 |
| Example 22 | 155.7 | 139.7 | 129.4 | 26.1 | 5560 |
| Example 23 | 156.2 | 141.1 | 132.6 | 25.3 | 5530 |
| Example 24 | 156.5 | 139.5 | 131.4 | 25.5 | 5550 |
| Example 25 | 155.5 | 136.7 | 129.8 | 25.8 | 5550 |
| Example 26 | 151.2 | 132.2 | 123.3 | 27.3 | 5630 |
| Example 27 | 154.5 | 137.8 | 125.2 | 27.1 | 5650 |
| Example 28 | 155.9 | 139.8 | 124.6 | 27.3 | 5650 |
| Example 29 | 152.3 | 129.3 | 119.5 | 28.2 | 5700 |
| Example 30 | 154.9 | 134.8 | 123.6 | 27.4 | 5580 |
| Example 31 | 156.2 | 137.3 | 131 | 25.3 | 5530 |
| Example 32 | 150.9 | 132.1 | 123.8 | 29.8 | 5570 |
| Comparative Example 1 | 148.1 | 129.8 | 117.5 | 30.7 | 4890 |
| Comparative Example 2 | 146.9 | 123.8 | 111.3 | 30.3 | 5050 |
| Comparative Example 3 | 147.5 | 123.9 | 112.8 | 30.2 | 4780 |

It can be seen from Table 1, Table 2 and Table 3 that in the present application, by optimizing the particle size distribution of the positive electrode active material and restricting the volume-based distribution curve to show a bimodal pattern, and by grading large particle size and small particle size as well as strictly controlling the particle sizes, an increase in compaction density and a reduction in lithium-ion transmission path can be achieved, thereby ensuring the kinetic performance of the secondary battery to be exerted and achieving an increase in the energy density of the secondary battery.

The secondary battery and electrochemical device provided by the present application are described in detail above. Specific examples are used herein to illustrate the principles and implementation methods of the present application. The explanations of the above examples are only intended to help understand the method and its core concept of the present application. At the same time, for those skilled in the art, according to the concept of the present application, changes may be made in the specific implementation method and the scope of application. In summary, the content of the present specification should not be construed as a limitation on the present application.

**Claims**

1.  A secondary battery, comprising: a positive electrode sheet, a negative electrode sheet, a separator and an electrolyte; wherein the positive electrode sheet comprises a positive electrode current collector and a positive electrode active material layer arranged on the positive electrode current collector, the positive electrode active material layer comprises a positive electrode active material, the positive electrode active material has a particle size distribution curve comprising a first peak and a second peak; and

    the secondary battery satisfies: $0.22 \leq K \leq 2.13$, and $K = Dn50 \times (Dv90 - Dv10) / Dv50$;
    wherein, $Dn50$ $\mu$m is a particle size corresponding to a cumulative quantity percentage of the positive electrode active material reaching 50%;
    $Dv10$ $\mu$m is a particle size corresponding to a cumulative volume percentage of the positive electrode active material reaching 10%;
    $Dv50$ $\mu$m is a particle size corresponding to a cumulative volume percentage of the positive electrode active material reaching 50%;
    $Dv90$ $\mu$m is a particle size corresponding to a cumulative volume percentage of the positive electrode active material reaching 90%; and
    based on that a sum of an area proportion of the first peak and an area proportion of the second peak is 100%, the area proportion of the first peak is $S_1$%, the area proportion of the second peak is $S_2$%, and $R = S_1 / S_2$, satisfying $0.25 \leq R \leq 2.33$.

2.  The secondary battery according to claim 1, wherein the first peak and the second peak satisfy: $0.43 \leq R \leq 1.50$.

3.  The secondary battery according to claim 1, wherein a particle size corresponding to a peak value of the first peak is $D_1$ $\mu$m; and a particle size corresponding to a peak value of the second peak is $D_2$ $\mu$m; satisfying: $0.4 \leq D_1 \leq 0.8$, $2.0 \leq D_2 \leq 3.0$.

4.  The secondary battery according to claim 1, wherein the first peak has a height of $H_1$ $\mu$m; and the second peak has a height of $H_2$ $\mu$m; satisfying: $H_1 < H_2$.

5.  The secondary battery according to claim 1, wherein the $Dn50$ is 0.3 to 0.45.

6.  The secondary battery according to claim 5, wherein the $Dn50$ is 0.3 to 0.35.

7.  The secondary battery according to claim 1, wherein the $Dv10$ is 0.3 to 0.55.

8.  The secondary battery according to claim 7, wherein the $Dv10$ is 0.33 to 0.5.

9.  The secondary battery according to claim 1, wherein the $Dv50$ is 1.1 to 2.0.

10. The secondary battery according to claim 9, wherein the $Dv50$ is 1.2 to 1.5.

11. The secondary battery according to claim 1, wherein the $Dv90$ is 2.0 to 6.0.

12. The secondary battery according to claim 11, wherein the $Dv90$ is 3.0 to 5.5.

13. The secondary battery according to claim 1, wherein the secondary battery satisfies: $0.13 \leq Z \leq 13.4$, and $Z = K \times R \times PD$; wherein $PD$ g/cm$^3$ is a compaction density of the positive electrode sheet.

14. The secondary battery according to claim 13, wherein the compaction density PD g/cm$^3$ of the positive electrode sheet satisfies: $2.45 \leq PD \leq 2.7$.

15. The secondary battery according to claim 1, wherein the positive electrode active material comprises a lithium-containing compound, and the lithium-containing compound further comprises an element M, and the element M comprises one or more of Ti, V, Mn, Co, Ni, Zr, Nb, Mo, or Y.

16. The secondary battery according to claim 15, wherein the element M accounts for a mass percentage of e% in the positive electrode active material, satisfying: $0.1 \leq e \leq 0.6$.

17. The secondary battery according to claim 1, wherein the positive electrode active material comprises $Li_aM_xFe_{(1-x)}PO_4$; and M is selected from one or more of Ti, V, Mn, Co, Ni, Zr, Nb, Mo, or Y, $0.8 \leq a \leq 1.2$, and $0 \leq x < 1$.

18. An electrochemical device, comprising the secondary battery according to any one of claims 1 to 17.

FIG. 1

## INTERNATIONAL SEARCH REPORT

| International application No. |
| --- |
| **PCT/CN2023/142181** |

### A. CLASSIFICATION OF SUBJECT MATTER

H01M10/058(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, WPABS, CNKI: 电池, 粒径, 正极, 峰, 面积, 压实密度, Cell, particle size, positive electrode, peak, area, compacted density

### C. DOCUMENTS CONSIDERED TO BE RELEVANT

| Category* | Citation of document, with indication, where appropriate, of the relevant passages | Relevant to claim No. |
| --- | --- | --- |
| PX | CN 117175018 A (SUNWODA POWER TECHNOLOGY CO., LTD.) 05 December 2023 (2023-12-05)<br>claims 1-18 | 1-18 |
| Y | CN 116365013 A (SUNWODA ELECTRIC VEHICLE BATTERY CO., LTD.) 30 June 2023 (2023-06-30)<br>description, paragraphs 6-136 | 1-18 |
| Y | CN 114068920 A (BYD CO., LTD.) 18 February 2022 (2022-02-18)<br>description, paragraphs 4-48, and figure 1 | 1-18 |
| Y | CN 116314601 A (SUNWODA ELECTRIC VEHICLE BATTERY CO., LTD.) 23 June 2023 (2023-06-23)<br>description, paragraphs 5-90 | 1-18 |
| A | CN 114068921 A (BYD CO., LTD.) 18 February 2022 (2022-02-18)<br>entire document | 1-18 |
| A | CN 115084508 A (SUNWODA ELECTRIC VEHICLE BATTERY CO., LTD.) 20 September 2022 (2022-09-20)<br>entire document | 1-18 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 March 2024** | **26 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/142181**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115528296 A (SUNWODA ELECTRIC VEHICLE BATTERY CO., LTD.) 27 December 2022 (2022-12-27) <br>     entire document | 1-18 |

Form PCT/ISA/210 (second sheet) (July 2022)

**INTERNATIONAL SEARCH REPORT**
Information on patent family members

| International application No. |
| --- |
| **PCT/CN2023/142181** |

| Patent document cited in search report | | | Publication date (day/month/year) | Patent family member(s) | Publication date (day/month/year) |
| --- | --- | --- | --- | --- | --- |
| CN | 117175018 | A | 05 December 2023 | None | |
| CN | 116365013 | A | 30 June 2023 | None | |
| CN | 114068920 | A | 18 February 2022 | None | |
| CN | 116314601 | A | 23 June 2023 | None | |
| CN | 114068921 | A | 18 February 2022 | None | |
| CN | 115084508 | A | 20 September 2022 | None | |
| CN | 115528296 | A | 27 December 2022 | None | |

Form PCT/ISA/210 (patent family annex) (July 2022)